# EUROPEAN PATENT APPLICATION

(11) **EP 4 734 571 A1**
(43) Date of publication of application: **29.04.2026**
(21) Application number: 25210487.2
(22) Date of filing: 22.10.2025
(51) Int. Cl.: H04W 8/18, H04W 12/00

(54) **METHOD FOR MANAGING REMOTE MANAGER MODULES IN AN EMBEDDED UNIVERSAL INTEGRATED CIRCUIT CARD, CORRESPONDING DEVICE AND SYSTEM ARCHITECTURE**

(30) Priority: 28.10.2024 IT 202400024045
(71) Applicant: STMicroelectronics International N.V., 1228 Plan-les-Ouates, Geneva (CH)
(72) Inventor: VANORE, Agostino, I-81020 San Marco Evangelista (Caserta) (IT); VENEROSO, Amedeo, I-81100 Caserta (IT)
(74) Representative: Buzzi, Notaro & Antonielli d'Oulx S.p.A.

(57) **Abstract**

Method for managing association between an embedded Universal Integrated Circuit Card, eUICC, for Internet of Things, IoT, devices (200) and a set of external remote manager modules (204) comprising external operational remote manager modules (204) configured to perform at least a set of operations comprising profile state management operations and remote manager modules management operations in said eUICC for IoT devices (200);
wherein said method comprises:
- performing in said eUICC for IoT devices (200) association between said eUICC for IoT devices (200) and at least one external handling remote manager module (202) further provided in said set of external remote manager modules (204) and configured to perform in said set of operations only remote manager modules management operations in said eUICC for IoT devices (200); and
- upon receival of a request of associating an external operational remote manager module (204) issued via said at least one external handling remote manager module (202), performing in said eUICC for IoT devices (200) association between said eUICC for IoT devices (200) and at least one external operational remote manager module (204).

## Description

### Technical field

The description relates to integrated circuit cards.

One or more embodiments can be applied to integrated circuit cards such as, for instance, embedded UICCs, eUICCs.

### Background

Integrated circuit cards such as Universal Integrated Circuit Cards, UICCs are widely used in a variety of contexts and applications such as in mobile terminals (mobile network devices) in order to facilitate establishing a connection with the Global System for Mobile Communications, GSM or the Universal Mobile Telecommunications System, UMTS networks, maintaining the integrity and security of personal data.

Embedded UICCs, eUICCs are a type of integrated circuit card based on architectural standards published by the GSM Association, GSMA and configured to facilitate a secure storage of one or more SIM ("Subscriber Identity Module") card profiles, each of such one or more SIM card profiles comprising unique identifiers and cryptographic keys used by a cellular network service providers in order to uniquely identify each of the profiles.

For instance, such profiles may be used in a mobile network device comprising a corresponding eUICC, thus, enabling such mobile network device to register and securely communicate via the cellular network.

The technical specification of the GSMA SGP.32 standard facilitates broadening the use of such eUICCs to IoT ("Internet of Things") devices by describing the architecture of the eSIM IoT system, that is, of an eUICC for IoT devices (see, for instance, eSIM IoT Technical Specification, Version 1.0.1, 04 July 2023).

IoT devices may be devices comprising sensors, processing ability, software and/or other technologies that can be configured to connect and exchange data with other devices and/or systems over the Internet or other communications networks, for instance, the cellular network.

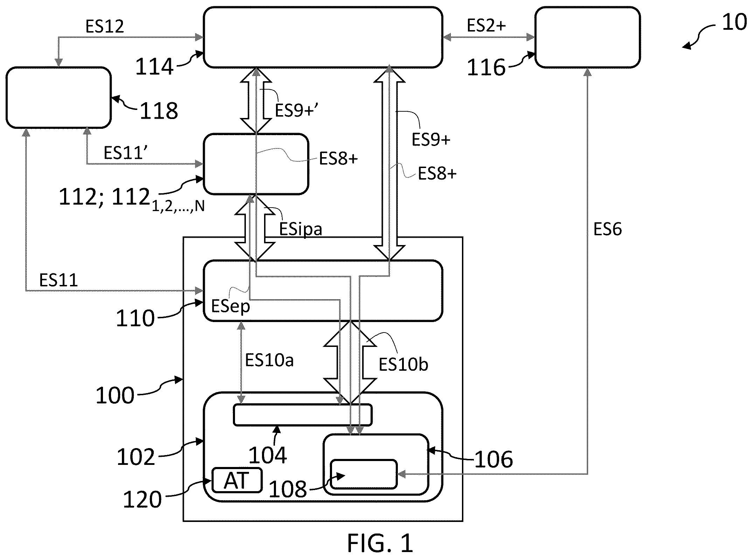

The general architecture of a system for remotely provisioning and managing an eUICC for IoT devices is illustrated in Figure 1.

Figure 1 illustrates an IoT device 100 comprising:
- an eUICC for IoT devices 102, such eUICC for IoT devices 102 comprising an ISD-R ("Issuer Security Domain - Root") block 104 and an ISD-P ("Issuer Security Domain - Profile") block 106 that comprises an MNO-SD ("Mobile Network Operator Security Domain") block 108; and
- an IPAd ("IoT Profile Assistant in the IoT Device") block 110 configured to serve as a proxy between the eUICC for IoT devices 102 and an eSIM IoT remote Manager, eIM 112.

The eUICC for IoT devices 102, in particular, its ISD-R block 104, may be configured to be interfaced with the IPAd block 110 through:
- a first IPA--eUICC interface ES10a, for performing profile download and installation operations and handling profile discovery, and
- a second IPA--eUICC interface ES10b, for performing generic eUICC package download and execution.

The IPAd block 110 may be configured to be interfaced with the eIM 112 through an eIM--IPA interface ESipa, for performing profile download and installation operations. Such eIM--IPA interface ESipa may be used for triggering profile download at the IPAd block 110 and for providing a secure transport of the downloaded profiles to the eUICC for IoT devices 102.

The eIM 112 is a module, usually a software implemented module, for instance, a server, configured to be external to the IoT device 100 and configured to perform profile state management operations, that is, subscriptions management operations.

It is noted that the eIM 112, differently from other platforms such as a SM-DP+ block 114 described in the following, may not require a certification, for instance, a SAS ("Security Accreditation Scheme") certification. In fact, the eIM 112 can be controlled by an OEM ("Original Equipment Manufacturer") that chooses the level of security of such eIM 112.

The profile state management operations may comprise for instance, sending profile state management packages to the eUICC for IoT devices 102, enable, disable, and delete profiles or to trigger profile downloads at eUICC of the IoT devices. The eIM 112 can either be a stand-alone component or a component of a higher-level functional system (e.g., device management platform).

Such eIM 112 may be configured to manage a single device, for instance, the IoT device 100, or a plurality of IoT devices, facilitating the management of such devices and their profiles.

To manage a given device, such eIM 112 may be configured to be interfaced with the eUICC for IoT devices 102 of such given device through an eIM--eUICC interface ESep, such eIM--eUICC interface ESep being a logical end-to-end interface between eIM 112 and such eUICC for IoT devices 102 used to transfer eUICC packages for profile state management and eIM configuration data sent by the eIM 112.

The eUICC packages for profile state management may comprise a REMOTE administration command or a plurality of REMOTE administration commands, that is, a session. A session could comprise even a single command.

It is noted that the REMOTE administration commands can be divided into two groups, a first group comprising commands related to eIM Configuration Operations (eCOs) and a second group comprising commands related to Profile State Management Operations (PSMOs).

Such REMOTE administration commands may comprise, for instance, the following types of commands:
- an enable command, used to enable an installed profile in the eUICC 102, related to Profile State Management Operations;
- a disable command, used to disable an enabled profile in the eUICC 102, related to Profile State Management Operations;
- a delete command, used to delete an installed profile in the eUICC 102, related to Profile State Management Operations;
- a list of profile information command (related to Profile State Management Operations), used by the eIM 112 to retrieve a list of profile information for installed profiles, including their current state, that is, enabled or disabled, and their associated profile metadata;
- a get RAT ("Rules Authorisation Table") command, used by the eIM 112 to retrieve the Rules Authorisation Table, RAT from the eUICC 102, the get RAT command being related to Profile State Management Operations;
- a configure auto-enable command, used to configure an automatic enabling of a profile in the eUICC 102, related to Profile State Management Operations;
- an ADD eIM command, used to add an associated eIM 112 to the eUICC 102 by providing eIM configuration data, related to eIM Configuration Operations;
- an update eIM command, used to update eIM configuration data within the eUICC 102, related to eIM Configuration Operations;
- a DELETE eIM command, used to delete an associated eIM 112 from the eUICC 102, related to eIM Configuration Operations; and/or
- a list eIM command, used by the eIM 112 to request the eUICC 102 to provide a list of currently configured associated eIMs, related to eIM Configuration Operations.

Therefore, the eIM 112 may be further configured to manage a list of eIMs on an eUICC, that is, to perform eCO ("eIM Configuration Operation"), for instance, by adding new eIMs via the ADD eIM command, deleting eIMs via the DELETE eIM command, and the like.

Such eIM 112 is further configured to communicate with:
- a SM-DP+ ("Subscription Manager Data Preparation +") block 114, which is a server configured to prepare, store, and deliver digital eSIM profiles based on information obtained from an operator 116 through an operator--SM-DP+ interface ES2+, such operator--SM-DP+ interface ES2+ being used by the operator to request the preparation of a profile for one or more eUICCs for IoT devices 102 and for other administrative functions, and
- a SM-DS ("Subscription Manager Discovery Server") block 118, which is a server configured to hold a list of the profiles that are available to each of the considered devices.

The communication between the eIM 112 and the SM-DP+ block 114 may be implemented through an eIM--SM-DP+ interface ES9+', such eIM--SM-DP+ interface ES9+' being used for profile download and installation and being secured with an HTTPS ("HyperText Transfer Protocol Secure") protocol in server authentication mode.

The communication between the eIM 112 and the SM-DS block 118 may be implemented through an eIM--SM-DS interface ES11', such eIM--SM-DS interface ES11' being used to retrieve records of the events between such eIM 112 and such SM-DS block 118 and being secured by TLS ("Transport Layer Security") in server authentication mode.

In addition, such SM-DP+ block 114 may be configured to be interfaced with the SM-DS block 118 through an SM-DS--SM-SP+ interface ES12, such SM-DS--SM-SP+ interface ES12 being used by the SM-DP+ block 114 to manage event registrations and event deletions on the SM-DS block 118.

The MNO-SD block 108 may be configured to be interfaced with the operator 116 through an operator--eUICC interface ES6, such operator--eUICC interface ES6 being used by the operator in order to manage their profiles stored within the eUICC for IoT devices 102 via OTA ("Over-The-Air") services.

The IPAd block 110 may be further configured to be interfaced with the SM-DP+ block 114 through an IPA--SM-DP+ interface ES9+, such IPA--SM-DP+ interface ES9+ being used for providing a secure transport of profile packages between the SM-DP+ block 114 and the IPAd block 110, for instance, using an HTTPS ("HyperText Transfer Protocol Secure") protocol in server authentication mode to communicate.

In addition, such IPAd block 110 may be further configured to be interfaced with the SM-DS block 118 through an IPA--SM-DS interface ES11, such IPA--SM-DS interface ES11 being used to retrieve records of events between such IPAd block 110 and such SM-DS block 118 and being secured by TLS ("Transport Layer Security") in server authentication mode.

The eUICC for IoT devices 102 may be further configured to be interfaced with the SM-DP+ block 114 through an SM-DP+--eUICC interface ES8+, such SM-DP+-eUICC interface ES8+ being configured to couple the ISD-P block 106 of the eUICC for IoT devices 102 with the SM-DP+ block 114 in order to provide a secure end-to-end channel between them for the administration of such ISD-P block 106 and the associated profiles during download and installation operations.

Such coupling provided by such SM-DP+--eUICC interface ES8+ may be intended to be tunneled either over:
- the IPA--SM-DP+ interface ES9+ and the second IPA--eUICC interface ES10b for a direct profile download, that is, wherein the IPAd block 110 can directly communicate with the SM-DP+ block 114, or
- the eIM--SM-DP+ interface ES9+', the eIM--IPA interface ESipa, and the second IPA--eUICC interface ES10b for an indirect profile download, that is, wherein the IPAd block 110 communicates with the SM-DP+ block 114 via the eIM 112.

In the general architecture of the system for remotely provisioning and managing eUICCs for IoT devices 102 as described in Figure 1, such eUICC for IoT devices 102 is to be associated with at least one eIM 112 before being able to do any profile state management operations.

It is underlined that the expression "associated eIM" per se is in the field indicative of an eIM in a specific relationship with an eUICC, specifically an eIM whose eIM Configuration Data are available within the eUICC.

Such Configuration Data are used by the eUICC for verification of an eIM Configuration Operation or PSMO, as for instance defined in the Specification SGP.31 eSIM IoT Architecture and Requirements Version 1.0 19 April 2022.

Such association between the eUICC for IoT devices 102 and the at least one eIM 112 may be done by exchanging data and, in particular, via a key-pair, for instance, an ECC ("Elliptic-Curve Cryptography") keypair.

For instance, the eIM may send to the eUICC for IoT devices 102, through the eIM- -eUICC interface ESep implemented on a communication network N, at least one set of data comprising configuration data of the at least one eIM 112.

For instance, such association may be performed via a request of association sent through a command ADD eIM comprising such at least one set of data and sent by the at least one eIM 112 to the eUICC for IoT devices 102, for instance, using the eIM--eUICC interface ESep implemented over the communication network N.

Such set of data may be sent either by the eIM 112 itself (as previously described) already associated with the eUICC or by the IPAd block 110 in case of the first eIM adding.

In response to the reception of the at least one set of data comprising the configuration data of the at least one eIM 112, that is, in response to the reception of a command ADD eIM, the eUICC for IoT devices 102 is configured to store such set of data, for instance, in the OS ("Operating System") of such eUICC 102.

After such storing operation, the eUICC for IoT devices 102 and the eIM 112 may be considered associated.

For instance, a set of data comprising configuration data of a corresponding eIM 112 may comprise:
- an eIM ID, that is, an eIM identifier, unique for each of the eIMs associated with a corresponding eUICC for IoT devices, for instance, a text string,
- one or more eIM keys, for instance, a public key of an asymmetric key pair, and
- one or more eIM certificates, that is, one or more electronic documents attesting a unique association between a public key and the identity of a subject, for instance, attesting a unique association between a public key and a corresponding eIM.

It is noted that a different set of data comprising configuration data of a corresponding eIM 112 is to be sent to the eUICC for IoT devices 102 for each of the eIMs 112 that is to be associated with such eUICC 102, therefore, a command ADD eIM may be sent for each of the eIMs 112 that is to be associated with the eUICC 102 by an already associated eIM.

In addition, an eIM 112 may be associated with an eUICC for IoT devices 102 at any time in the lifecycle of such eUICC for IoT devices 102, and a single eUICC for IoT devices 102 may be associated with more than one eIM 112.

In order to associate an additional eIM 112 with an eUICC for IoT devices 102, the set of data comprising configuration data of such additional eIM 112 is to be sent, for instance, by an eIM that is already associated with such eUICC for IoT devices 102, to such eUICC for IoT devices 102.

The sending of such set of data may be done, for instance, using a command ADD eIM comprising such set of data of the additional eIM 112 and sending such ADD eIM command from such already associated eIM to the eUICC for IoT devices 102, for instance, through the network N.

Moreover, an eIM 112 (for instance, a first eIM to be associated with an eUICC) may be associated by the IPAd block 110 with an eUICC for IoT devices 102 by sending a set of data comprising configuration data of such eIM 112 to the eUICC 102. These configuration data may be used for instance for verification of profile state manage operation.

It is noted that such association of the first eIM with an eUICC via the IPAd block 110 may be done latest at the OEM ("Original Equipment Manufacturer") device factory.

Even in the case of a first eIM association, the sending of such set of data may be done, for instance, using a command ADD eIM, that is, an ADD Initial EIM command in case of a first eIM association, comprising such set of data and sending such ADD Initial eIM command from the IPAd block 110 directly to the eUICC for IoT devices 102, for instance, without using the network N.

In addition, it is noted that such ADD Initial eIM command send by the IPAd block 110 to the eUICC for IoT devices 102 shall not comprise a signature in the set of data relating to the first eIM. In other words, the ADD Initial eIM command is not authenticated, while further ADD eIM commands that associate additional eIMs to the eUICC for IoT devices 102 shall comprise a digital cryptographic signature in the set of data relating to such additional eIMs 112 to allow the eUICC 102 to authenticate the set of data, that is, are authenticated.

Once an eIM 112 has been associated with an eUICC for IoT devices 102, such eUICC 102 may be configured to process commands coming from such eIM 112, such commands being signed with an eIM private key of an asymmetric key pair, such asymmetric key pair comprising the eIM private key and an eIM public key, and verified on the eUICC side with the eIM public key of the asymmetric key pair, for instance, stored by the eUICC 102.

An association token generation unit 120, for instance, a global counter, may be configured to generate, if required in an ADD eIM command sent to the eUICC for IoT devices 102 by a given eIM 112, an association token AT that is associated with such given eIM 112 in order to avoid reply attacks.

Replay attacks consist in sniffing and resending previously sent command or a session to the eUICC for IoT devices 102 in order to deceive such eUICC for IoT devices 102 in accepting and performing such previously sent command or session.

It is noted that it is also possible to dissociate, that is, to remove the association between the eIM 112 and the eUICC 102, by removing the configuration data of the eIM 112 from the eUICC 102.

For instance, the association of the eIM 112 and the eUICC 102 may be ended by deleting the set of data comprising the configuration data of the eIM 112 from the OS of such eUICC for IoT devices 102.

For example, the deletion may be performed using a command DELETE eIM indicating which eIM is to be deleted. Such DELETE eIM command can be considered as a removing association request since it indicates to remove the association between the eUICC for IoT devices 102 and an eIM 112 associated to such eUICC 102.

Such command DELETE eIM is sent from an associated eIM or from a backend system to the eUICC for IoT devices 102 through the network N, for instance.

A problem of known solutions is related to the fact that, even if eUICCs according to the technical specification of the GSMA SGP.32 standard are provided with MNO ("Mobile Network Operator") flexibility in order to avoid being constrained by MNOs fees, the setup cost of the infrastructure required by the OEM ("Original Equipment Manufacturer") for implementing such standard, that is, the costs related to the eIM 112, may delay the deployment of the solution and may lead to additional costs that can be hardly returned.

Usually, the cost of the MNO subscriptions for the IoT devices that comprise an eUICC as described above is (even very) low since IoT traffic is typically (even very) limited. Nevertheless, the costs for maintaining an eIM 112 may be comparable to such MNO subscriptions.

Therefore, according to known solutions, OEMs have to choose between two options:
- use a M2M ("Machine-To-Machine") UICC lacking capabilities of profile switching, that is, a no-RSP ("Remote SIM Provisioning") UICC, accepting the impacts on the negotiation capabilities with the MNOs (since the cost for changing MNO is, usually very, high, in fact, in order to change MNO, the SIM ("Subscriber Identity Module") device is to be physically changed, for instance, by an operator going to the site of the device and, if such SIM device is soldered, costs may rise even more); or
- use a RSP ("Remote SIM Provisioning") eUICC, that is, a eUICC provided with the possibility of having its profiles remotely managed by secure storing, installing, switching, and deactivating such profiles over-the-air ("OTA"), paying the cost of the eIM 112, comprising operational costs, costs related to required infrastructure availabilities, and the like. Under the same perspective of paying the cost of the eIM 112, it is also possible to rely on third-party companies for the provision of the eIM. The latter may present, in addition to the fact that it is still an expensive solution, a problem related to discontinuance in the service of third-party companies, leading to a "locked" eUICC, *i.e.* an eUICC where there is no possibility of updating the profile.

Therefore, solutions that facilitate the provision of a profile switching function without facing the previously described interruption of service and/or cost problems would be beneficial in order to maintain independence from MNOs.

Also, operational eIMs may be exposed to attacks from malicious operational eIMs that, once associated with an eUICC, can perform all kinds of operations such as abusively deleting the operational eIMs associated with the eUICC, leading to a Denial-of-Service condition. Therefore, solutions that facilitate preventing such Denial-of-Service attacks may be advantageous.

### Object and summary

An object of one or more embodiments is to contribute in providing solutions that facilitate providing a profile switching function without facing the previously described interruption of service and/or cost problems in order to maintain independence from MNOs.

According to one or more embodiments, that object is achieved via a method for managing remote manager modules in an embedded Universal Integrated Circuit Card having the features set forth in the claims that follow.

One or more embodiments concern a related device.

One or more embodiments concern a related system architecture.

The claims are an integral part of the technical teaching provided in respect of the embodiments.

Solutions as described herein include a method for managing association between an embedded Universal Integrated Circuit Card, eUICC, for Internet of Things, IoT, devices and a set of external remote manager modules comprising external operational remote manager modules configured to perform at least a set of operations comprising profile state management operations and remote manager modules management operations in said eUICC for IoT devices;
wherein said method comprises:
- performing in said eUICC for IoT devices association between said eUICC for IoT devices and at least one external handling remote manager module further provided in said set of external remote manager modules and configured to perform in said set of operations only remote manager modules management operations in said eUICC for IoT devices; and
- upon receiving a request of associating an external operational remote manager module issued via said at least one external handling remote manager module, performing in said eUICC for IoT devices association between said eUICC for IoT devices and at least one external operational remote manager module.

In various embodiments, said at least one external handling remote manager module is an eSIM IoT remote Manager, eIM, configured to perform only remote manager modules management operations out of said set of operations, and said external operational remote manager modules are eSIM IoT remote Managers, eIMs, configured to perform both profile state management operations and remote manager modules management operations out of said set of operations.

In various embodiments, said operation of performing in said eUICC for IoT devices association between said eUICC for IoT devices and the at least one external handling remote manager module comprises storing in said eUICC for IoT devices, in particular during a production of said eUICC for IoT devices, configuration data of said at least one external handling remote manager module, in particular wherein said configuration data of the at least one external handling remote manager module comprise a public key of said at least one external handling remote manager module.

In various embodiments, said operation of performing in said eUICC for IoT devices, upon receival of a request of associating an external operational remote manager module issued via said at least one external handling remote manager module, association between said eUICC for IoT devices and at least one external operational remote manager module comprises receiving at the eUICC for IoT devices a token sent from the at least one external operational remote manager module;
wherein said token is provided to the at least one external operational remote manager module via said at least one external handling remote manager module by:
- receiving at the at least one external handling remote manager module a token generation request, in particular sent by an original equipment manufacturer OEM;
- generating, in response to the reception of the token generation request and at the at least one external handling remote manager module, the token, said token being signed with a private key of said at least one external handling remote manager module; and
- sending, via the at least one external handling remote manager module, the token to the at least one external operational remote manager module.

In various embodiments, said operation of performing in said eUICC for IoT devices association between said eUICC for IoT devices and at least one external operational remote manager module comprises receiving at the eUICC for IoT devices an ADD eIM command from the at least one external operational remote manager module, said ADD eIM command comprising configuration data of said at least one external operational remote manager module and the token.

In various embodiments, said method comprises, upon the performing in said eUICC for IoT devices of the association between said eUICC for IoT devices and at least one external operational remote manager module, receiving at the eUICC for IoT devices a removing association request indicating to remove said association between said at least one external handling remote manager module and said eUICC for IoT devices.

In various embodiments, said removing association request is sent by the at least one external operational remote manager module and is signed with a private key of said at least one external operational remote manager module.

In various embodiments, said removing association request is comprised in a DELETE eIM command, said DELETE eIM command being sent by said at least one external operational remote manager module to the eUICC and indicating to remove the association between said at least one external handling remote manager module and said eUICC.

In various embodiments, upon the performing in said eUICC for IoT devices of the association between said eUICC for IoT devices and at least one external operational remote manager module, said at least one external handling remote manager module is configured to issue further requests of associating external operational remote manager modules to the eUICC for IoT devices, said at least one external handling remote manager module being an administrative remote manager module; and
wherein said administrative remote manager module is associated to the eUICC for IoT devices:
- during a production of said eUICC for IoT devices, or
- in response to the reception at the eUICC for IoT devices of a request of associating the administrative remote manager module with said eUICC for IoT devices using configuration data of said administrative remote manager module, said request of association being signed with a private key of a different administrative remote manager module.

In various embodiments, the association between said administrative remote manager module and the eUICC for IoT devices is removed in response to the reception at the eUICC for IoT devices of a removing association request indicating to remove the association between the administrative remote manager module and the eUICC for IoT devices, said remove association request being signed with a private key of a different administrative remote manager module.

In various embodiments, the embedded Universal Integrated Circuit Card, eUICC, for Internet of Things, IoT, devices is operated according to the GSMA SGP.32 standard.

In various embodiments, the at least one external handling remote manager module is further provided in said set of external remote manager modules and configured to perform in said set of operations only remote manager modules management operations in said eUICC for IoT devices.

Therefore, solutions as described herein facilitate providing a profile switching function without facing interruption of service and/or cost problems, maintaining independence from MNOs.

### Brief description of the figures

One or more embodiments will now be described, by way of example only, with reference to the annexed figures, wherein:
Figure 1, as previously described, illustrates a general architecture of a system for remotely provisioning and managing an eUICC for IoT devices; and
Figures 2A, 2B, and 2C illustrate communication diagrams according to embodiments of the present description.

Corresponding numerals and symbols in the different figures generally refer to corresponding parts unless otherwise indicated.

The figures are drawn to clearly illustrate the relevant aspects of the embodiments and are not necessarily drawn to scale.

The edges of features drawn in the figures do not necessarily indicate the termination of the extent of the feature.

### Detailed description

In the ensuing description one or more specific details are illustrated, aimed at providing an in-depth understanding of examples of embodiments of this description. The embodiments may be obtained without one or more of the specific details, or with other methods, components, materials, etc. In other cases, known structures, materials, or operations are not illustrated or described in detail so that certain aspects of embodiments will not be obscured.

Reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment" that may be present in one or more points of the present description do not necessarily refer to one and the same embodiment.

Moreover, particular configurations, structures, or characteristics may be combined in any adequate way in one or more embodiments.

The headings/references used herein are provided merely for convenience and hence do not define the extent of protection or the scope of the embodiments.

For simplicity and ease of explanation, throughout this description, and unless the context indicates otherwise, like parts or elements are indicated in the various figures with like reference signs, and a corresponding description will not be repeated for each and every figure.

As described above, solutions as disclosed herein facilitate providing a profile switching function without facing interruption of service problems, for instance, of third-party company eIMs, and/or cost problems, for instance, related to the operation of an eIM and to the availability of the infrastructures requested for such eIM, thus, maintaining independence from MNOs, for instance, maintaining negotiation capabilities.

Solutions as described herein define a provisional eIM, that is, an eIM having limited capabilities since it is able to manage a limited set of REMOTE administration commands.

It is noted that such provisional eIM having limited capabilities has also a limited cost.

Solutions as described herein may also define an administrative eIM, that is, an eIM having limited capabilities since it is able to manage a limited set of REMOTE administration commands but remaining available for the whole lifecycle of an eUICC to which it is associated.

It is noted that an eIM 112 according to the previous description will be referred to by the wording operational eIM 112 in order to differentiate the eIM 112 described above from the provisional eIM and the administrative eIM disclosed in solutions according to the present description.

It is noted that provisional eIMs and administrative eIMs are referred in the following description with the wording handling eIMs. Therefore, a handling eIM may be either a provisional eIM or an administrative eIM.

It is noted that the provisional eIM and/or the administrative eIM can be configured to be preloaded on an eUICC, for instance, by storing in the eUICC the eIM configuration data comprising a public key of such provisional eIM and/or such administrative eIM, for instance, during a production of such eUICC.

The provisional eIM described herein and, if present, the administrative eIM described herein are configured to perform operations related to the management of operational eIMs 112, for instance, enabling or disabling one or more operational eIMs 112, and to not perform operations related to profile state management operations.

Therefore, such provisional eIM and/or such administrative eIM, instead of performing the previously described REMOTE administration commands related to Profile State Management Operations (PSMOs) and to eIM Configuration Operations (eCOs), are configured to perform only eCO-related commands, thus, not performing Profile State Management Operations commands.

It is noted that operations different from Profile State Management Operations (PSMOs) and eIM Configuration Operations (eCOs) may still be performed by provisional eIMs and/or administrative eIMs. For instance, communications operations between a provisional eIM and/or an administrative eIM and other entities via the communication network N (such as interactions with an OEM back-end - like a device management unit - to report the status of the devices, or the like) or operations related to security functions may still be performed.

Therefore, the previously described operational eIMs 112 are configured to perform at least the REMOTE administration commands comprised in the set of operations comprising:
- Profile State Management Operations (PSMOs); and
- remote manager modules management operations, that is, eIM Configuration Operations (eCOs).

Thus, the operational eIMs 112 are configured to perform, according to the GSMA SGP.32 standard, operations comprising at least a set of PSMOs and a set of remote manager modules management operations, that is, eCOs.

It is noted that operational eIMs 112 may also be configured to perform additional operations different from PSMOs and eCOs, for instance:
- operations for communicating with other entities via the communication network N, such as communications operations with the IPA via the eIM-IPA interface ESipa, the SM-DP+ via the eIM--SM-DP+ interface ES9+', the SM-DS via the eIM--SM-DS interface ES11', and the like, and
- operations related to security functions.

Therefore, operational eIMs may be configured to perform a set of operations comprising PSMOs and eCOs, and, possibly, further operations.

The provisional eIMs and/or the administrative eIMs or, in general, the handling eIMs, are configured to perform only remote manager modules management operations, that is, eIM Configuration Operations (eCOs), in such set of operations comprising PSMOs and eCOs.

It is noted that such handling eIMs may also be configured to perform additional operations different from eCOs, PSMOs excluded, for instance:
- operations for communicating with other entities via the communication network N, and
- operations related to security functions.

It is noted that, in embodiments of solutions according to the present description, such handling eIMs are configured to perform only remote manager modules management operations, that is, eIM Configuration Operations (eCOs), without further operations.

For instance, the profile state management operations, PSMO, may comprise at least one operation among:
- enabling operations used to enable a profile installed on a eUICC 102 or 200;
- disabling operations used to disable an enabled profile installed on the eUICC 102 or 200;
- deleting operations used to delete a profile installed on the eUICC 102 or 200;
- listing operations used to obtain lists of profiles installed on the eUICC 102 or 200;
- get rules authorisation table, RAT, operations used to obtain rules authorisation table from the eUICC 102 or 200; and
- configuration operations used to enable an automatic enabling of a profile installed on the eUICC 102 or 200.

For instance, the remote manager modules management operations, in particular eIM Configuration Operations eCO, comprise at least one operation among:
- associating operations, in particular performed via ADD eIM commands, used to associate a remote manager module, for instance, an operational eIM 112 or 204 or a handling eIM 202, to the eUICC 102 or 200 via configuration data of such remote manager module 112 or 202-204;
- deleting operations, in particular performed via DELETE eIM commands, used to remove the association between a remote manager module, for instance, an operational eIM 112 or 204 or a handling eIM 202, and the eUICC 102 or 200;
- updating operations used to update the configuration data of a remote manager module, for instance, an operational eIM 112 or 204 or a handling eIM 202, associated to the eUICC 102 or 200; and
- listing operations used to obtain lists of remote manager modules, for instance, operational eIMs 112 or 204 or handling eIMs 202, associated to the eUICC 102 or 200.

Provisional eIMs as described herein are configured to perform such eCO-related commands until a first association of an operational eIM 112 with an eUICC 102 is performed.

After the first association of an operational eIM 112 with the eUICC 102, the provisional eIM is discontinued, that is, is dissociated from the eUICC 102 (removing the previous association with the eUICC 102 by erasing the configuration data of the provisional eIM from the eUICC 102), for instance, via a DELETE eIM command signed with a private key of the operational eIM 112.

Hence, solutions as described herein refers to a method for managing operational remote manager modules, for instance, operational eIMs 112 as described above, in an embedded Universal Integrated Circuit Card, eUICC, for Internet of Things, IoT, devices 102, such operational remote manager modules 112 being configured to perform at least a set of operations comprising profile state management operations, PSMOs, and remote manager modules management operations, for instance, eCOs, in such eUICC for IoT devices 102.

It is noted that such operational remote manager modules 112 may be configured to perform additional operations besides those comprised in such set of operations, for instance, such operational remote manager modules 112 may be configured to perform communication and security related operations.

Such method comprises:
- associating such eUICC 102 to at least one handling remote manager module, for instance, at least one handling eIM such as a provisional eIM and/or an administrative eIM, such at least one handling remote manager module being configured in such set of operations to perform only remote manager modules management operations in such eUICC for IoT devices 102, thus, not performing profile state management operations in such set of operations; and
- associating, via a remote manager modules management operation performed by such at least one handling remote manager module, such eUICC 102 to at least one operational remote manager module 112.

It is noted that also such at least one handling remote manager module may be configured to perform additional operations besides remote manager modules management operations, for instance, such at least one handling remote manager module may be configured to perform communication and security related operations.

It is noted that such at least one handling remote manager module may be an (handling, for instance, provisional or administrative) eSIM IoT remote Manager, eIM, configured to perform only remote manager modules management operations, for instance, eCOs, out of such set of operations, and wherein such operational remote manager modules 112 may be (operational) eSIM IoT remote Manager, eIM, configured to perform both profile state management operations, PSMOs, and remote manager modules management operations, for instance, eCOs, out of such set of operations.

In addition, the operation of associating such eUICC 102 to the at least one handling remote manager module, for instance, to the handling eIM that can be a provisional eIM or an administrative eIM, may be performed by storing, in particular during a production of such eUICC 102, configuration data of such at least one handling remote manager module into the eUICC 102, in particular wherein such configuration data of the at least one handling remote manager module comprise a public key of such at least one handling remote manager module.

It is noted that eCO-related commands may be, for instance, obtained via the following ASN.1 ("Abstract Syntax Notation One"), that is, a standard interface description language ("IDL") for defining data structures that can be serialized and deserialized in a cross-platform way independently from specific computer or programming languages, data object:

```
        Eco ::= CHOICE {
                addEim [8] EimConfigurationData,
                deleteEim [9] SEQUENCE {eimId [0] UTF8String},
                updateEim [10] EimConfigurationData,
                listEim [11] SEQUENCE {}
        }
```

which is widely explained in document eSIM IoT Technical Specification, Version 1.0.1, 04 July 2023.

The ASN.1 *CHOICE* function used to define the eCO-related commands *Eco* is used when a variable is to be defined with a value that can be one of several different types (in the case above, the eCO-related commands *Eco* may be either *addEim, deleteEim, updateEim,* or *listEim*) depending on which of those values is needed at a given time.

Therefore, the provisional eIM can be configured to perform REMOTE administration commands out of the following REMOTE administration commands used to manage operational eIMs 112 (that is, commands related to eIM Configuration Operations):
- the ADD eIM command, indicated in the data object above with the label *addEim,* used to add an operational eIM 112 to an eUICC 102;
- the DELETE eIM command, indicated in the data object above with the label *deleteEim,* used to delete an associated operational eIM 112 from the eUICC 102;
- the update eIM command, indicated in the data object above with the label *updateEim,* used to update operational eIM configuration data within the eUICC 102; and/or
- the list eIM command, indicated in the data object above with the label *listEim,* used to request to the eUICC 102 to provide a list of currently configured associated operational eIMs 112.

It is noted that such REMOTE administration commands are performed by the provisional eIM until a first association of an operational eIM 112 with the eUICC 102 is performed via an ADD eIM command.

In fact, after such first association the provisional eIM is discontinued, that is, is dissociated from the eUICC 102 by removing the previous association, that is, by deleting the configuration data of the provisional eIM from the eUICC 102.

Differently from the provisional eIM, the administrative eIM may be configured to perform such eCO-related commands (that is, the eCO-related commands *Eco* previously described) for the whole duration of the lifecycle of the eUICC to which it is associated.

In fact, the administrative eIM is not discontinued, that is, not dissociated from the eUICC, after a first association between an operational eIM 112 and the eUICC 102, that is, the configuration data of the administrative eIM are not deleted from the eUICC after a first, and possibly further, association between an operational eIM 112 and the eUICC 102.

It is noted that a handling eIM may act both as an administrative eIM and as a provisional eIM, that is, the administrative eIM of some eUICCs may correspond to a provisional eIM of other eUICCs. In such a case, the handling eIM acts as a provisional eIM, thus, being deleted after a first association of an operational eIM as previously described, for some eUICCs and as an administrative eIM for other eUICCs, thus, in this last case the handling eIM is not discontinued after the first association, that is, is not dissociated from the eUICC after the first association and its configuration data are not deleted from the eUICC after such first association, for instance, via a deletion command signed by the operational eIM added with the first association operation.

If the administrative eIM is present, that is, if a handling eIM is not discontinued (that is, is not dissociated from the eUICC by removing the previous association) after the first association, it is possible to manage operational eIMs 112 during the lifecycle of the eUICC 102. For instance, it is possible to add an operational eIM 112 via an ADD eIM command in any moment of the lifecycle of the eUICC 102, for instance, even after a possible discontinuity of the already associated operational eIMs 112 (for instance, operational eIMs provided by third-party companies).

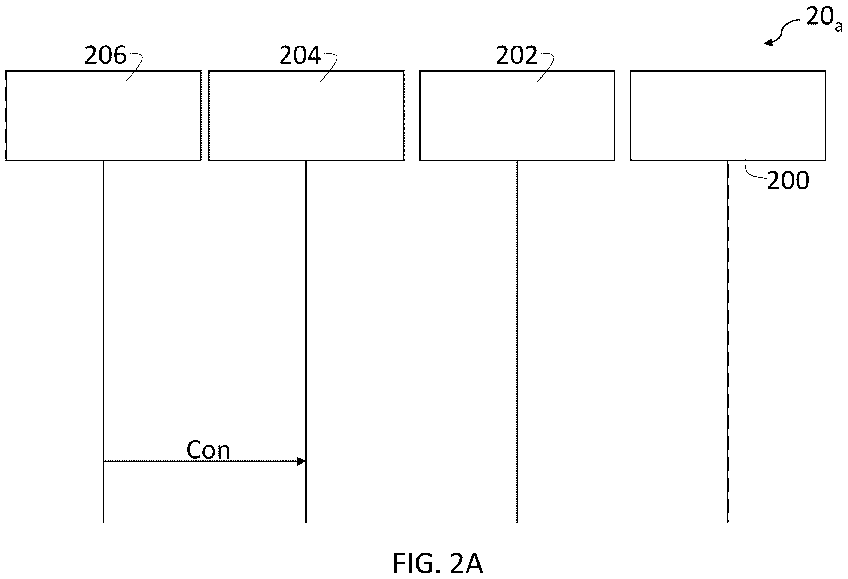

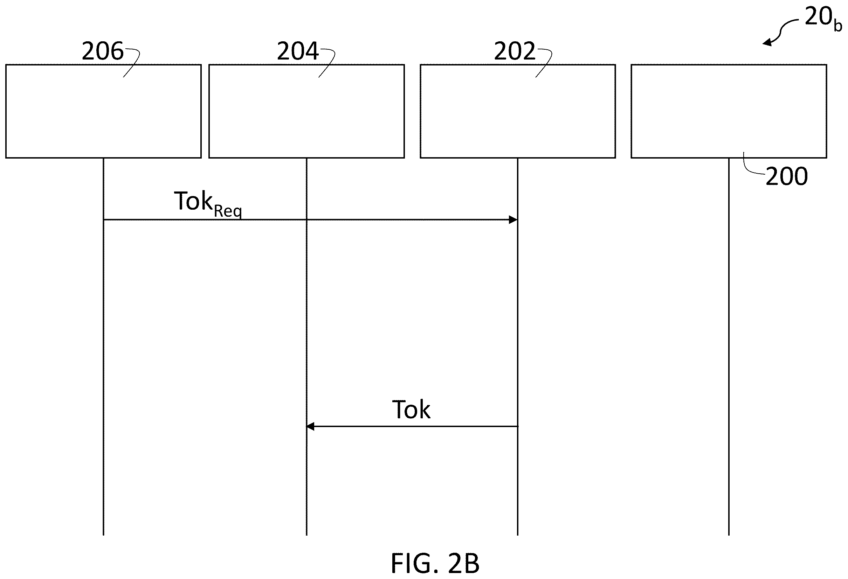

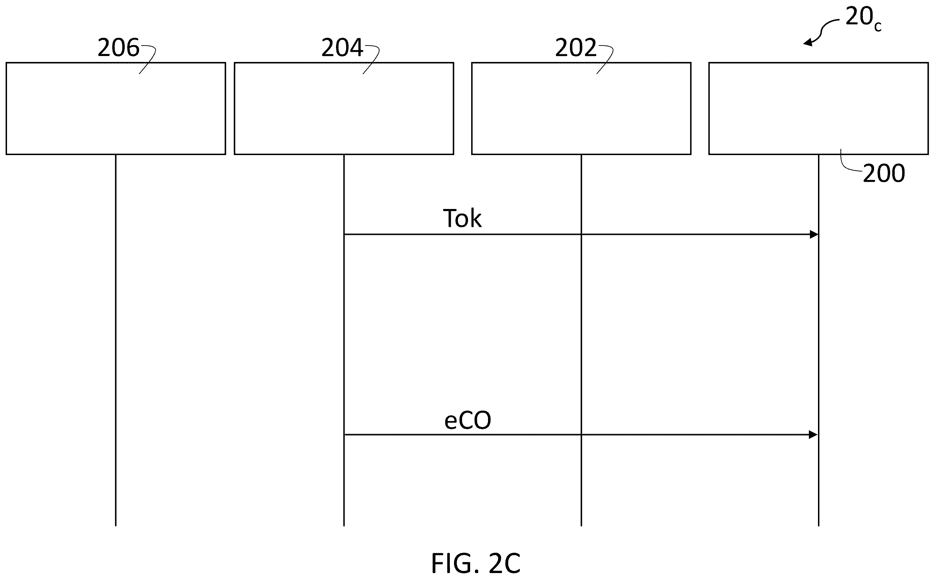

Figures 2A, 2B, and 2C illustrate communication diagrams 20ₐ, 20_{b}, and, 20_{c} according to embodiments of the present description.

Figures 2A, 2B, and 2C illustrate an eUICC 102 (that is referred to with the label 200 in Figures 2A, 2B, and 2C), a provisional eIM 202, an operational eIM 112 (that is referred to with the label 204 in such Figures 2A, 2B, and 2C), and an OEM ("Original Equipment Manufacturer") 206.

The eUICC 200 may be configured to store, for instance, during its production, the public key of the provisional eIM 202.

The eUICC 200 stores such public key of the provisional eIM 202 until the OEM 206 selects an operational eIM 204 that is to be associated with such eUICC 200, that is, such eUICC 200 stores such public key of the provisional eIM 202 while it is not associated with any operational eIM 204.

During the lifecycle of the eUICC 200, the OEM 206 may decide to activate the Remote SIM Provisioning for such eUICC 200, therefore, such OEM 206 may make a contract Con with an operational eIM 204, for instance, an eIM provided by a third-party company.

To associate the eUICC 200 with the operational eIM 204, the OEM 206 may request a respective token Tok via a token request Tok_{Req} sent from the OEM 206 to the provisional eIM 202.

In response to the reception of the token request Tok_{Req}, the provisional eIM 202 may be configured to send such token Tok to the operational eIM 204 in order to enable such operational eIM 204.

It is noted that if a plurality of eUICCs is to be associated with an operational eIM 204, a respective token Tok is requested via a respective token request Tok_{Req} sent from the OEM 206 to the provisional eIM 202 for each eUICC 200 in the plurality of eUICCs.

It is noted that in embodiments of solutions as described herein a same token Tok may be used to associate a subset, such as a batch, of eUICCs 200 to a same handling eIM. In this case, each eUICC in such subset of eUICCs 200 may be configured to store, for instance, during its production, the same public key of the provisional eIM 202. Therefore, a same "unlock" credential, such as the previously described public key of the provisional eIM 202, is to be stored on each eUICC of the subset of eUICCs.

In such a case, in response to the reception of the respective token requests Tok_{Req}, the provisional eIM 202 may be configured to send to the operational eIM 204 a set of tokens comprising, for each eUICC 200 in the plurality of eUICCs, the respective tokens Tok.

For instance, a token may be obtained via the REMOTE administration command ADD eIM where the eIM to be associated with the eUICC 200 is the operational eIM 204 (that is, *token = ADD eIM*(*operational eIM*)), such command being signed with the private key of the provisional eIM 202.

In response to the reception of the token Tok (or the set of tokens if a plurality of eUICCs is considered), the operational eIM 204 may be configured to forward such token Tok (or such set of tokens) to the eUICC 200 (or to respective eUICCs 200 in the plurality of eUICCs).

In response to the reception of the token Tok, the eUICC 200 may be configured to enable the operational eIM 204 as an authorized eIM.

Therefore, the eUICC for IoT devices 200 may, upon receival of a request of associating an operational eIM 112 issued via the handling eIM 202, performing in the eUICC for IoT devices 200 association between said eUICC for IoT devices 200 and at least one operational eIM 204.

In such a case, the request of associating the operational eIM 112 received at the eUICC 200 is sent by the operational eIM 204 to the eUICC 200 with the involvement of the handling eIM 202. In fact, as previously described, the handling eIM 202 may be configured to generate a token Tok that is sent to the operational eIM 204, thus, issuing the sending of the request of associating the operational eIM 112 to the eUICC 200.

Such request of associating the operational eIM 112 to the eUICC 200 may be, for instance, an ADD eIM command comprising configuration data of the operational eIM 204 that is to be associated with the eUICC 200 and such token Tok sent from the handling eIM 202 to the operational eIM 204.

Then, the operational eIM 204 may be configured to delete the provisional eIM 202 from the authorized eIMs of the eUICC 200 in order to discontinue such provisional eIM 202, that is, in order to dissociate the provisional eIM 202 from the eUICC 200 by deleting the configuration data of the provisional eIM 202 from the eUICC 200, for instance, via a DELETE eIM command signed with a private key of such operational eIM 204.

For instance, the deletion of the provisional eIM 202 may be performed via an eCO such as a DELETE eIM REMOTE administration command sent from the operational eIM 204 to the eUICC 200, that is, *DELETE eIM* (*provisional eIM*), such eCO being signed with the private key of the operational eIM 204.

Therefore, by using a provisional eIM 202 as described herein instead of an eIM of known type 112, that is, an operational eIM 204, is possible to:
- save the costs and the complexity of having a database since a provisional eIM 202 does not need a database while an operational eIM 204 requires a database for storing the status of all the eUICCs to which it is associated, for instance, data related to currently enabled profiles, or the like;
- save the costs and the complexity of having to provide an online service since a provisional eIM 202 does not need an online service since it is requested to react to a batch operation while an operational eIM 204 requires an online service for the OEM 206; and
- save the costs and the complexity of having to provide interoperability between different platforms since a provisional eIM 202 does not need a link with any platform while an operational eIM 204 requires a link with the OEM 206 platform and/or system.

In addition, solutions using a provisional eIM 202 as described herein may provide a profile switching function without facing the previously described cost problems, also reducing the complexity of the solution.

It is noted that eUICCs 200 in solutions as described herein may be associated with one or more provisional eIMs 202 and/or one or more administrative eIMs, therefore, multiple provisional and/or administrative eIMs are possible.

It is noted that in embodiments of solutions as described herein the provisional eIM 202 and the administrative eIM may be a same eIM, thus, a handling eIM may act as a provisional eIM 202 for some eUICCs and as an administrative eIM for other eUICCs.

The administrative eIM is an eIM with the following features:
- it may have a flag indicating that the eIM is an administrative eIM;
- it cannot be deleted, for instance, via DELETE eIM REMOTE administration commands, except by other administrative eIMs, therefore, facilitating preventing Denial-of-Service attacks performed by malicious operational eIMs; and
- it can be installed, for instance, via ADD eIM REMOTE administration commands, only by other administrative eIMs, that is, it can be associated to an eUICC via commands signed by other administrative eIMs.

It is noted that the administrative eIM may share the previous description of the provisional eIM 202, regarding both the communication diagrams and the advantages related to costs and complexity, except for the deletion performed via the eCO, that is, except for the DELETE eIM REMOTE administration command sent from the operational eIM 204 to the eUICC 200.

Therefore, the eUICC 200 may be configured to store, for instance, during its production, the public key of the administrative eIM.

The eUICC 200 stores such public key of the administrative eIM for the duration of its lifecycle.

During the lifecycle of the eUICC 200, the OEM 206 may decide to activate the Remote SIM Provisioning for such eUICC 200, therefore, such OEM 206 may make a contract Con with an operational eIM 204, for instance, an eIM provided by a third-party company.

To associate the eUICC 200 with the operational eIM 204, the OEM 206 may request a respective token Tok via a token request Tok_{Req} sent from the OEM 206 to the administrative eIM.

In response to the reception of the token request Tok_{Req}, the administrative eIM may be configured to send such token Tok to the operational eIM 204 in order to enable such operational eIM 204.

It is noted that if a plurality of eUICCs is to be associated with an operational eIM 204, a respective token Tok is requested via a respective token request Tok_{Req} sent from the OEM 206 to the administrative eIM for each eUICC 200 in the plurality of eUICCs.

In such a case, in response to the reception of the respective token requests Tok_{Req}, the administrative eIM may be configured to send to the operational eIM 204 a set of tokens comprising, for each eUICC 200 in the plurality of eUICCs, the respective tokens Tok.

For instance, a token may be obtained via the REMOTE administration command ADD eIM where the eIM to be associated with the eUICC 200 is the operational eIM 204 (that is, *token = ADD eIM*(*operational eIM*)), such command being signed with the private key of the administrative eIM.

In response to the reception of the token Tok (or the set of tokens if a plurality of eUICCs is considered), the operational eIM 204 may be configured to forward such token Tok (or such set of tokens) to the eUICC 200 (or to respective eUICCs 200 in the plurality of eUICCs).

In response to the reception of the token Tok, the eUICC 200 may be configured to enable the operational eIM 204 as an authorized eIM.

Hence, also by using an administrative eIM as described herein instead of an eIM of known type 112, that is, an operational eIM 204, is possible to:
- save the costs and the complexity of having a database since an administrative eIM does not need a database while an operational eIM 204 requires a database for storing the status of all the eUICCs to which it is associated, for instance, data related to currently enabled profiles, or the like;
- save the costs and the complexity of having to provide an online service since an administrative eIM does not need an online service since it is requested to react to a batch operation while an operational eIM 204 requires an online service for the OEM 206; and
- save the costs and the complexity of having to provide interoperability between different platforms since an administrative eIM does not need a link with any platform while an operational eIM 204 requires a link with the OEM 206 platform and/or system.

In addition, also solutions using an administrative eIM as described herein may provide a profile switching function without facing the previously described cost problems, reducing the complexity of the solution.

In addition, by considering also an administrative eIM it is possible to solve the previously described problem related to the interruption of service of eIMs of third-party companies.

To summarize, in solutions as described herein the operation of associating, via a remote manager modules management operation (for instance, via an associating operation comprised in eCOs as described above) performed by at least one handling remote manager module, for instance, a handling eIM 202, an eUICC 102 or 200 to at least one operational remote manager module, for instance, an operational eIM 112 or 204, may comprise:
- receiving at the at least one handling remote manager module 202 a token generation request such as the token request Tok_{Req}, in particular sent by an original equipment manufacturer OEM 206;
- generating, in response to the reception of the token generation request Tok_{Req} and via the remote manager modules management operation performed by the at least one handling remote manager module 202, a token Tok, such token Tok being signed with a private key of such at least one handling remote manager module 202;
- sending, via the at least one handling remote manager module 202, the token Tok to the at least one operational remote manager module 112 or 204; and
- sending, via the at least one operational remote manager module 112 or 204, the token Tok to the eUICC 102 or 200.

In addition, in solutions according to the present description, the token Tok sent from the at least one operational remote manager module, for instance, the operational eIM 112 or 204, to the eUICC 102 or 200 may be comprised in an ADD eIM command, such ADD eIM command being sent by such at least one operational remote manager module 112, 204 to the eUICC 102, 200 and indicating to associate such at least one operational remote manager module 112, 204 with such eUICC 102, 200 using configuration data of such at least one operational remote manager module 112, 204.

In solutions according to the present description, in response to the eUICC 102 or 200 being associated, via the remote manager modules management operation, that is, via eCOs, performed by such at least one handling remote manager module, for instance, the handling eIM 202, to such at least one operational remote manager module, for instance, to the operational eIM 112 or 204, it is possible to remove such association between such at least one handling remote manager module 202 and such eUICC 102, 200.

It is noted that, in such a case, the handling remote manager module 202 acts as a provisional eIM for the eUICC 102, 202, since the association between the handling remote manager module 202 and the eUICC 102, 202 is removed when a first operational remote manager module 112 or 204 is associated with such eUICC 102, 202, that is, after a first association of an operational eIM with the eUICC.

It is noted that such operation of removing the association between the at least one handling remote manager module, for instance, the handling eIM 202, and the eUICC 102, 200 may be performed by sending to the eUICC 102, 200, via the at least one operational remote manager module, for instance, the operational eIM 112 or 204, a removing association request, for instance, a deleting operation comprised in the eCOs as previously described, indicating to remove the association between the at least one handling remote manager module 202 and the eUICC 102, 200.

It is noted that the removing association request is to be signed with a private key of the at least one operational remote manager module 112 or 204.

Therefore, such removing association request may be comprised in a DELETE eIM command, such DELETE eIM command being sent by such at least one operational remote manager module, for instance, the operational eIM 112 or 204, to the eUICC 102 or 200 and indicating to remove the association between such at least one handling remote manager module, for instance, the handling eIM 202, and such eUICC 102, 200.

In solutions as described herein, such at least one handling remote manager module, for instance, the handling eIM 202, may be configured to, in response to the eUICC 102 or 200 being associated, via the remote manager modules management operation (for instance, eCO) performed by such at least one handling remote manager module 202, to such at least one operational remote manager module, for instance, the operational eIM 112 or 204, receive requests indicating to perform further remote manager modules management operations (for instance, further eCOs).

It is noted that, in such a case, the at least one handling remote manager module 202 is an administrative remote manager module, for instance, an administrative eIM.

The administrative remote manager modules are remote manager modules that can be:
- associated to eUICCs 102 or 200 during productions of such eUICCs or via association commands indicating to associate an administrative remote manager module with respective eUICCs using configuration data of such administrative remote manager module, such association commands being signed with a private key of a different administrative remote manager module; and
- deleted from the eUICCs 102 or 200 via deletion commands indicating to remove the association between the administrative remote manager module and the eUICCs, such deletion command being signed with a private key of a different administrative remote manager module.

According to the GSMA SGP.32 standard, an eIM 112 or 204 can be created with an ADD eIM or an ADD Initial eIM REMOTE administration command, conveying the previously described eIM configuration data.

For instance, exemplary eIM configuration data may be represented via the following ASN.1 data object:

```
        EimConfigurationData ::= SEQUENCE {
                eimId [0] UTF8String (SIZE(1..128)),
                eimFqdn [1] UTF8String OPTIONAL,
                eimIdType [2] EimIdType OPTIONAL,
                counterValue [3] INTEGER OPTIONAL,
                associationToken [4] INTEGER OPTIONAL,
                eimPublicKeyData [5] CHOICE {
                       eimPublicKey SubjectPublicKeyInfo,
                       eimCertificate Certificate
               } OPTIONAL,
                trustedPublicKeyDataTls [6] CHOICE {
                       trustedEimPkTls SubjectPublicKeyInfo,
                       trustedCertificateTls Certificate
               } OPTIONAL,
                eimSupportedProtocol [7] EimSupportedProtocol OPTIONAL,
                euiccCiPKId [8] SubjectKeyIdentifier OPTIONAL,
                indirectProfileDownload [9] NULL OPTIONAL
        }
```

wherein:
- *eimId* is a first field indicating an identifier ID of the eIM used to uniquely identify the eIM within a eUICC;
- *eimFqdn* is a second optional field indicating a FQDN ("Fully Qualified Domain Name") of the eIM or of an intermediate server, if used;
- *eimIdType* is a third optional field indicating a type of the identifier ID of the eIM;
- *counterValue* is a fourth optional field indicating an initial counter value for the eIM;
- *association Token* is a fifth optional field indicating an association token value for the eIM used for replay protection;
- *eimPublicKeyData* is a sixth optional field related to the eIM public key data assuming either a raw public key value *eimPublicKey* or a certificate value *eimCertificate;*
- *trustedPublicKeyDataTls* is a seventh optional field assuming either the eIM public key value *trustedEimPkTls* or the certificate value *trustedCertificateTls;*
- *eimSupportedProtocol* is an eight optional field comprising more information regarding the eIM protocol support;
- *euiccCiPKId* is a ninth optional field indicating an identifier of the public key certificate issuer (CI) supported on the eUICC for signature creation; and
- *indirectProfileDownload* is a tenth optional field for supporting indirect profile download.

It is noted that the previously described ASN.1 data object is described more in detail in document eSIM IoT Technical Specification, Version 1.0.1, 04 July 2023.

To indicate that an eIM is a provisional eIM 204 or an administrative eIM as described herein, it is possible, for instance, to provide additional fields at the end of the eIM configuration data, for instance:

```
        EimConfigurationData ::= SEQUENCE {
                eimId [0] UTF8String (SIZE(1. .128)),
                eimFqdn [1] UTF8String OPTIONAL,
                eimIdType [2] EimIdType OPTIONAL,
                counterValue [3] INTEGER OPTIONAL,
                association Token [4] INTEGER OPTIONAL,
                eimPublicKeyData [5] CHOICE {
                       eimPublicKey SubjectPublicKeyInfo,
                       eimCertificate Certificate
               } OPTIONAL,
                trustedPublicKeyDataTls [6] CHOICE {
                       trustedEimPkTls SubjectPublicKeyInfo,
                       trustedCertificateTls Certificate
               } OPTIONAL,
                eimSupportedProtocol [7] EimSupportedProtocol OPTIONAL,
                euiccCiPKId [8] SubjectKeyIdentifier OPTIONAL,
                indirectProfileDownload [9] NULL OPTIONAL,
               provisionalEim [10] NULL OPTIONAL,
                administrativeEim [11] NULL OPTIONAL
        }
```

wherein:
- *provisionalEim* is an eleventh optional field indicating that, if present, the eIM is a provisional eIM as described herein; and
- *administrativeEim* is a twelfth optional field indicating that, if present, the eIM is an administrative eIM as described herein.

It is noted that the additional fields described herein are only exemplary ways to indicate that an eIM is a provisional eIM 204 or an administrative eIM, for instance, another way may use subsequent STORE DATA requests, or the like.

It is noted that such STORE DATA command is an APDU ("Application Protocol Data Unit") command issued to the eUICC 200 to carry the binary format of the ASN.1. Such a command is defined in the SGP.22, for instance, in the document SGP.22 RSP Technical Specification, Version 2.2.2.

To support the association with a provisional eIM 202 and/or with an administrative eIM as described herein, an eUICC 200 may be configured in at least one of the following ways:
- to store the public key and eIM configuration data of a provisional eIM and of an administrative eIM, thus, providing both the provisional and the administrative feature;
- to store the public key and eIM configuration data of a provisional eIM only, thus, not supporting the administrative eIM feature; it is noted that since an administrative eIM may be installed, that is, associated to an eUICC, by another administrative eIM, the administrative eIM feature will not be supported for the whole lifecycle of the eUICC 200;
- to store the public key and eIM configuration data of an administrative eIM only, thus, in such a case the provisional feature is provided by the administrative eIM; in this case the administrative eIM may also be an Initial eIM, that is, the eIM added with the ADD Initial eIM REMOTE administration command, even though it would be advantageous to have an eIM that is an administrative eIM but not the Initial eIM so that the administrative eIM feature is supported but a company can still perform an ADD Initial eIM command at OEM factory.

Thus, based on the description above, it is clear that the solution described refers to a method for managing operational remote manager modules, e.g., operational eIMs, 112 and 204, in an embedded Universal Integrated Circuit Card, eUICC, for Internet of Things, IoT, devices, e.g., the eUICC 102 or 200.

The operational remote manager modules 112 and/or 204 are configured to perform at least a set of operations comprising profile state management operations, e.g., PSMOs, and remote manager modules management operations, e.g., eCOs, in said eUICC for IoT devices.

Thus, the operational remote manager modules, specifically operational eIMs, are configured to perform operations which comprises at least a set of PSMO operations and also remote manager modules management operations, e.g., eCOs, although the operational eIMs may perform also other operations, e.g., the previously described communication operations used to communicate with other entities such as the IPA, the SM-DP+, and the SM-DS, i.e., operational eIM are configure to perform a set of operations comprising PSMOs and eCOs, and, possibly, further operations.

The method described herein comprises associating said eUICC 102 or 200 to at least one handling remote manager module, for instance, a handling eIM 202, such handling remote manager module corresponding, e.g., either to a provisional eIM or an administrative eIM.

The at least one handling remote manager module 202 is configured in said set of operations to perform only remote manager modules management operations, that is, eCOs, in said eUICC for IoT devices, i.e. said handling remote manager module, e.g. either operational or administrative eIM, is able to perform only said remote manager modules management operations (eCOs) in said set of two type of operations, comprising profile state management operations, e.g., PSMOs, and remote manager modules management operations, e.g., eCOs.

In embodiments the handling remote manager module is also configured to perform further operations, e.g. further with respect to PSMOs and eCOs as previously described.

In embodiments, the handling remote manager module, that is, the handling eIM corresponding to either a provisional eIM or an administrative eIM, is configured to perform only remote manager modules management operations, e.g., eCOs.

Such method comprises also an operation of associating, via a remote manager modules management operation, that is, an eCOs, performed by such at least one handling remote manager module 202, the eUICC 102 or 200 to at least one operational remote manager module 112 or 204.

Solutions as described herein also refers to an embedded Universal Integrated Circuit Card, eUICC, for Internet of Things, IoT, devices 102 or 200 configured to be associated with at least one external handling remote manager module 202, in particular an eSIM IoT remote Manager eIM such as a provisional eIM or an administrative eIM, configured to perform in such eUICC for IoT devices 102, 200 only remote manager modules management operations out of a set of operations comprising profile state management operations and remote manager modules management operations.

It is noted that the handling remote manager module 202 may be configured to perform additional operations out of such set of operations comprising profile state management operations and remote manager modules management operations, for instance, the handling remote manager module 202 may perform communication and security related operations.

The eUICC for IoT devices 102 or 200 as descried herein is configured to execute the steps of the method according to the present description.

Therefore, solutions according to the present description are related to a method for managing association between an embedded Universal Integrated Circuit Card, eUICC, for Internet of Things, IoT, devices 102, 200 and an external operational remote manager module in a set of external remote manager modules, for instance, a set of eIMs, comprising external operational remote manager modules, such as the previously described operational eIMs 112 or 204, configured to perform at least a set of operations comprising profile state management operations, such as PSMOs, and remote manager modules management operations, such as eCOs, in such eUICC for IoT devices 102, 200.

The set of external remote manager modules further comprises at least one external handling remote manager module, for instance, the provisional eIM 202 or the administrative eIM described above, configured to perform in such set of operations only remote manager modules management operations, such as eCOs, in such eUICC for IoT devices 102, 200, such at least one external handling remote manager module 202 being associated with said eUICC for IoT devices 102, 200.

The method described herein comprises, at the at least one external handling remote manager module 202, issuing a request of associating an external operational remote manager module 112 or 204 to the eUICC for IoT devices 102, 200, requesting to perform in such eUICC for IoT devices 102, 200 association between such eUICC for IoT devices 102, 200 and at least one external operational remote manager module 112 or 204.

The operation of issuing, via the at least one external handling remote manager module, e.g, 202, a request of associating an external operational remote manager module, 112, 204, to said eUICC for IoT devices, e.g., 102, 200, i.e., initiating the association process between the operational eIM and the eUICC, which is then completed with the consequent execution of the association between the operational eIM and the eUICC, comprises generating a token, e.g., Tok, and sending such token, e.g., Tok, to the at least one external operational remote manager module, e.g., 112, 204, requesting to perform the association of the eUICC for IoT devices, .e.g., 102; 200, with the at least one external operational remote manager module , e.g., 112, 204.

In other words, solutions according to the present description are related to a method for managing association between an embedded Universal Integrated Circuit Card, eUICC, for Internet of Things, IoT, devices 102, 200 and a set of external remote manager modules, for instance, a set of eIMs, comprising external operational remote manager modules, such as the previously described operational eIMs 112 or 204, configured to perform at least a set of operations comprising profile state management operations, such as PSMOs, and remote manager modules management operations, such as eCOs, in such eUICC for IoT devices 102, 200.

The method described herein comprises:
- performing in the eUICC for IoT devices 102, 200 association between such eUICC for IoT devices 102, 200 and at least one external handling remote manager module, for instance, the provisional eIM 202 or the administrative eIM described above, further provided in such set of external remote manager modules and configured to perform in such set of operations only remote manager modules management operations, such as eCOs, in such eUICC for IoT devices 102, 200; and
- upon receiving a request of associating, for instance, sent via an ADD eIM command, an external operational remote manager module 112 or 204 issued via such at least one external handling remote manager module 202, performing in such eUICC for IoT devices 102, 200 association between such eUICC for IoT devices 102, 200 and at least one external operational remote manager module 112 or 204.

Hence, solutions according to the present description are also related to a method for managing association between an embedded Universal Integrated Circuit Card, eUICC, for Internet of Things, IoT, devices 102, 200 and an external operational remote manager module in a set of external remote manager modules, for instance, a set of eIMs, comprising external operational remote manager modules, such as the previously described operational eIMs 112 or 204, configured to perform at least a set of operations comprising profile state management operations, such as PSMOs, and remote manager modules management operations, such as eCOs, in said eUICC for IoT devices 102, 200.

The set of external remote manager modules further comprises at least one external handling remote manager module, for instance the provisional eIM 202 or the administrative eIM described above, configured to perform in such set of operations only remote manager modules management operations, such as eCOs, in such eUICC for IoT devices 102, 200, such at least one external handling remote manager module 202 being associated with said eUICC for IoT devices 102, 200.

The method described herein comprises, via at least one of the external operational remote manager modules 112, 204:
- receiving at the at least one of the external operational remote manager modules 112, 204 from said at least one external handling remote manager module a request to be associated to said eUICC for IoT devices 102, 200; and
- in response to the reception of said request to be associated to said eUICC for IoT devices 102, 200, sending from the at least one of the external operational remote manager modules 112, 204 to the eUICC for IoT devices 102, 200 a request of association.

In embodiments of solutions according to the present description, the at least one external handling remote manager module 202 is an eSIM IoT remote Manager, eIM, configured to perform only remote manager modules management operations out of such set of operations, for instance, is a handling eIM according to the description provided above or a provisional or administrative eIM.

Similarly, the external operational remote manager modules 112 or 204 are eSIM IoT remote Managers, eIMs, configured to perform both profile state management operations and remote manager modules management operations out of such set of operations, for instance, are operational eIMs according to the description provided above.

It is noted that the operation of performing in such eUICC for IoT devices 102, 200 association between such eUICC for IoT devices 102, 200 and the at least one external handling remote manager module 202 described above may comprise storing in such eUICC for IoT devices 200, for instance, during a production of such eUICC for IoT devices 200, configuration data of such at least one external handling remote manager module 202, for instance, configuration data of a handling eIM as described above.

Such configuration data of the at least one external handling remote manager module 202 may comprise a public key of such at least one external handling remote manager module 202.

It is also noted that such operation of performing in the eUICC for IoT devices 200, upon receival of a request of associating an external operational remote manager module such as an operational eIM 204 issued via such at least one external handling remote manager module such as a handling eIM 202, association between such eUICC for IoT devices 200 and at least one external operational remote manager module such as an operational eIM 204 may comprise receiving at the eUICC for IoT devices 200 a token Tok sent from the at least one external operational remote manager module 204.

Such token Tok may be provided to the at least one external operational remote manager module 204 via such at least one external handling remote manager module 202 by:
- receiving at the at least one external handling remote manager module 202 a token generation request Tok_{Req}, for instance, sent by an original equipment manufacturer OEM 206;
- generating, in response to the reception of the token generation request Tok_{Req} and at the at least one external handling remote manager module 202, the token Tok, such token Tok being signed with a private key of such at least one external handling remote manager module 202; and
- sending, via the at least one external handling remote manager module 202, the token Tok to the at least one external operational remote manager module 204.

In addition, the operation of performing in such eUICC for IoT devices 200 association between such eUICC for IoT devices 200 and at least one external operational remote manager module such as an operational eIM 204 may comprise receiving at the eUICC for IoT devices 200 an ADD eIM command from the at least one external operational remote manager module 204, such ADD eIM command comprising configuration data of such at least one external operational remote manager module 204 and the token Tok.

It is noted that the method described herein may comprise, upon the performing in such eUICC for IoT devices 200 of the association between such eUICC for IoT devices 200 and at least one external operational remote manager module 204, for instance, an operational eIM 204, receiving at the eUICC for IoT devices 200 a removing association request indicating to remove such association between such at least one external handling remote manager module 202 and such eUICC for IoT devices 200.

Such removing association request may be sent by the at least one external operational remote manager module 204 and may be signed with a private key of such at least one external operational remote manager module 204.

In addition, such removing association request may be comprised in a DELETE eIM command, such DELETE eIM command being sent by such at least one external operational remote manager module 204 to the eUICC 200 and indicating to remove the association between such at least one external handling remote manager module, for instance, a provisional or an administrative eIM 202 according to the present description, and such eUICC 200.

Upon the performing in such eUICC for IoT devices 200 of the association between such eUICC for IoT devices 200 and at least one external operational remote manager module, for instance, an operational eIM 204, such at least one external handling remote manager module, for instance, an administrative eIM according to the present description, may be configured to issue further requests of associating external operational remote manager modules 112 or 204 to the eUICC for IoT devices 200.

In such a case, the at least one external handling remote manager module 202 is an administrative remote manager module (for instance, an administrative eIM as described above), that is, a remote manager module that is associated to the eUICC for IoT devices 200:
- during a production of such eUICC for IoT devices 200, or
- in response to the reception at the eUICC for IoT devices 200 of a request of associating the administrative remote manager module with such eUICC for IoT devices 200 using configuration data of such administrative remote manager module, such request of association being signed with a private key of a different administrative remote manager module, for instance, a different administrative eIM.

In addition, the association between an administrative remote manager module and the eUICC for IoT devices 202 may be removed in response to the reception at the eUICC for IoT devices 200 of a removing association request indicating to remove the association between the administrative remote manager module and the eUICC for IoT devices 200, such remove association request being signed with a private key of a different administrative remote manager module.

It is noted that the embedded Universal Integrated Circuit Card, eUICC, for Internet of Things, IoT, devices 102 or 200 according to solutions as described herein may be operated according to the GSMA SGP.32 standard.

In addition, the at least one external handling remote manager module, for instance, a provisional or an administrative eIM 202, according to the method described above may be further provided in the set of external remote manager modules and configured to perform in such set of operations only remote manager modules management operations, such as eCOs, in such eUICC for IoT devices 200.

In addition, solutions as described herein also refers to a system architecture comprising:
- an embedded Universal Integrated Circuit Card, eUICC, for Internet of Things, IoT, devices 102 or 200 operating in an IoT device 100; and
- a set of external remote manager modules comprising:
   external operational remote manager modules, that is, operational eIMs 112 or 204 external to the eUICC 102, configured to perform at least a set of operations comprising profile state management operations, such as PSMOs, and remote manager modules management operations, such as eCOs, in the eUICC for IoT devices 102 or 200; and
   at least one external handling remote manager module 202, in particular an eSIM IoT remote Manager eIM such as a provisional eIM or an administrative eIM, further provided in the set of external remote manager modules and configured to perform in such set of operations only remote manager modules management operations, such as eCOs, in the eUICC for IoT devices 102 or 200.

It is noted again that the handling remote manager module 202 may be configured to perform additional operations out of such set of operations comprising profile state management operations and remote manager modules management operations, for instance, the handling remote manager module 202 may perform communication and security related operations.

The system architecture as described herein is configured to perform the steps of the method according to the present description.

In addition, such system architecture may further comprise at least a server 114, in particular a SM-DP+ server, which is configured to prepare profiles, store profiles, and deliver digital profiles to embedded Universal Integrated Circuit Cards, eUICCs 102, 200, via at least one external operational remote manager module 112 or 204, in particular an eSIM IoT remote Manager eIM such as an operational eIM as described herein, configured to perform at least the operations comprised in such set of operations, that is, at least the profile state management operations and the remote manager modules management operations.

Thus, solutions as described herein facilitate the provision of a profile switching function without facing one or more of the following problems:
- interruption of service, for instance, of third-party company eIMs, and/or
- cost, for instance, related to the operation of an eIM and to the availability of the infrastructures requested for such eIM,
in order to maintain independence from MNOs, for instance, negotiation capabilities.

Further advantages that may be obtained with solutions as described herein may be the following:
- OEMs can reduce the cost of managing an eIM by using provisional and/or administrative eIMs which are much less expensive;
- also referring to the previous point, provisional and administrative eIMs do not require a database storing eUICC-related data but require a list of eUICCs that requires owner change;
- provisional and administrative eIMs do not require an online service but are able to operate offline;
- eUICCs associated with at least one provisional eIM and/or administrative eIM are more flexible and may be considered for even more application, allowing a wider development the eUICC market;
- provisional eIMs and administrative eIMs can be seen as insurances by OEMs since OEMs want to have the possibility of changing the operator, but, typically, they do not want to actually change it;
- since administrative eIMs cannot be deleted by non-administrative eIMs, it is possible to avoid any DoS ("Deny of Service") attack performed via an (operational) eIM, that is, avoiding the risk of attacks performed by a malicious (operational) eIM that, once added and associated with an eUICC, perform deletion operation of the other eIMs associated with the eUICC to create a Deny of Service condition; and
- administrative eIMs are additional guarantees of service in case of disruption, supporting operation continuity.

Without prejudice to the underlying principles, the details and the embodiments may vary, even significantly, with respect to what has been described by way of example only without departing from the scope of the embodiments.

The extent of protection is determined by the annexed claims.

## Claims

1. Method for managing association between an embedded Universal Integrated Circuit Card, eUICC, for Internet of Things, IoT, devices (102; 200) and a set of external remote manager modules (112; 204) comprising external operational remote manager modules (112; 204), in particular eSIM IoT remote Managers eIMs, configured to perform at least a set of operations comprising profile state management operations and remote manager modules management operations in said eUICC for IoT devices (102; 200);
wherein said method comprises:
- performing in said eUICC for IoT devices (102; 200) association between said eUICC for IoT devices (102; 200) and at least one external handling remote manager module (202), in particular an eSIM IoT remote Manager eIM, further provided in said set of external remote manager modules (112; 204) and configured to perform in said set of operations only remote manager modules management operations in said eUICC for IoT devices (102; 200); and
- upon receiving a request of associating an external operational remote manager module (112; 204) issued via said at least one external handling remote manager module (202), performing in said eUICC for IoT devices (102; 200) association between said eUICC for IoT devices (102; 200) and at least one external operational remote manager module (112; 204) in said set of external remote manager modules (112; 204).

2. The method according to claim 1, wherein said operation of performing in said eUICC for IoT devices (102; 200) association between said eUICC for IoT devices (102; 200) and the at least one external handling remote manager module (202) comprises storing in said eUICC for IoT devices (102; 200), in particular during a production of said eUICC for IoT devices (102; 200), configuration data of said at least one external handling remote manager module (202), in particular wherein said configuration data of the at least one external handling remote manager module (202) comprise a public key of said at least one external handling remote manager module (202).

3. The method according to claim 1 or claim 2, wherein said operation of performing in said eUICC for IoT devices (102; 200), upon receival of a request of associating an external operational remote manager module (112; 204) issued via said at least one external handling remote manager module (202), association between said eUICC for IoT devices (102; 200) and at least one external operational remote manager module (112; 204) comprises receiving at the eUICC for IoT devices (102; 200) a token (Tok) sent from the at least one external operational remote manager module (112; 204);
wherein said token (Tok) is provided to the at least one external operational remote manager module (112; 204) via said at least one external handling remote manager module (202) by:
- receiving at the at least one external handling remote manager module (202) a token generation request (Tok_{Req}), in particular sent by an original equipment manufacturer OEM (206);
- generating, in response to the reception of the token generation request (Tok_{Req}) and at the at least one external handling remote manager module (202), the token (Tok), said token (Tok) being signed with a private key of said at least one external handling remote manager module (202); and
- sending, via the at least one external handling remote manager module (202), the token (Tok) to the at least one external operational remote manager module (112; 204).

4. The method according to claim 3, wherein said operation of performing in said eUICC for IoT devices (102; 200) association between said eUICC for IoT devices (102; 200) and at least one external operational remote manager module (112; 204) comprises receiving at the eUICC for IoT devices (102; 200) an ADD eIM command from the at least one external operational remote manager module (112; 204), said ADD eIM command comprising configuration data of said at least one external operational remote manager module (112; 204) and the token (Tok).

5. The method according to any one of the previous claims, wherein said method comprises, upon the performing in said eUICC for IoT devices (102; 200) of the association between said eUICC for IoT devices (102; 200) and at least one external operational remote manager module (112; 204), receiving at the eUICC for IoT devices (102; 200) a removing association request indicating to remove said association between said at least one external handling remote manager module (202) and said eUICC for IoT devices (102; 200);
in particular, wherein:
- said removing association request is sent by the at least one external operational remote manager module (112; 204) and is signed with a private key of said at least one external operational remote manager module (112; 204); and/or
- said removing association request is comprised in a DELETE eIM command, said DELETE eIM command being sent by said at least one external operational remote manager module (112; 204) to the eUICC (102; 200).

6. The method according to any one of claims 1 to 4, wherein upon the performing in said eUICC for IoT devices (102; 200) of the association between said eUICC for IoT devices (102; 200) and at least one external operational remote manager module (112; 204), said at least one external handling remote manager module (202) is configured to issue further requests of associating external operational remote manager modules (112; 204) to the eUICC for IoT devices (102; 200), said at least one external handling remote manager module (202) being an administrative remote manager module; and
wherein said administrative remote manager module is associated to the eUICC for IoT devices (102; 200):
- during a production of said eUICC for IoT devices (102; 200), or
- in response to the reception at the eUICC for IoT devices (102; 200) of a request of associating the administrative remote manager module with said eUICC for IoT devices (102; 200) using configuration data of said administrative remote manager module, said request of association being signed with a private key of a different administrative remote manager module;
wherein the association between said administrative remote manager module and the eUICC for IoT devices (102; 202) is removed in response to the reception at the eUICC for IoT devices (102; 200) of a removing association request indicating to remove the association between the administrative remote manager module and the eUICC for IoT devices (102; 200), said remove association request being signed with a private key of a different administrative remote manager module.

7. The method according to any one of the previous claims, wherein the embedded Universal Integrated Circuit Card, eUICC, for Internet of Things, IoT, devices (102; 200) is operated according to the GSMA SGP.32 standard.

8. A system architecture (10), comprising:
- an embedded Universal Integrated Circuit Card, eUICC, for Internet of Things, IoT, devices (102; 200) operating in an IoT device (100); and
- a set of external remote manager modules (112; 204) comprising:
external operational remote manager modules (112; 204) configured to perform at least a set of operations comprising profile state management operations and remote manager modules management operations in said eUICC for IoT devices (102; 200); and
at least one external handling remote manager module (202) further provided in said set of external remote manager modules (112; 204) and configured to perform in said set of operations only remote manager modules management operations in said eUICC for IoT devices (102; 200);
wherein the eUICC for IoT devices (102; 200) comprised in said system architecture (10) is configured to perform the steps of the method according to any one of claims 1 to 7.

9. An embedded Universal Integrated Circuit Card, eUICC, for Internet of Things, IoT, devices (102; 200) configured to be associated with at least one external handling remote manager module (202), in particular an eSIM IoT remote Manager eIM, configured to perform in said eUICC for IoT devices (102; 200) only remote manager modules management operations out of a set of operations comprising profile state management operations and remote manager modules management operations;
said eUICC for IoT devices (102; 200) being configured to execute the steps of the method according to any one of the previous claims 1 to 7.

10. Method for managing association between an embedded Universal Integrated Circuit Card, eUICC, for Internet of Things, IoT, devices (102; 200) and an external operational remote manager module (112; 204) in a set of external remote manager modules (112; 204) comprising external operational remote manager modules (112; 204), in particular eSIM IoT remote Managers eIMs, configured to perform at least a set of operations comprising profile state management operations and remote manager modules management operations in said eUICC for IoT devices (102; 200);
wherein said set of external remote manager modules (112; 204) comprises at least one external handling remote manager module (202), in particular an eSIM IoT remote Manager eIM, configured to perform in said set of operations only remote manager modules management operations in said eUICC for IoT devices (102; 200), said at least one external handling remote manager module (202) being associated with said eUICC for IoT devices (102; 200);
said method comprising, issuing, via the at least one external handling remote manager module (202), a request of associating an external operational remote manager module (112; 204) to said eUICC for IoT devices (102; 200), requesting to perform in said eUICC for IoT devices (102; 200) association between said eUICC for IoT devices (102; 200) and at least one external operational remote manager module (112; 204).

11. The method according to claim 10, wherein said operation of issuing, via the at least one external handling remote manager module (202), a request of associating an external operational remote manager module (112; 204) to said eUICC for IoT devices (102; 200) comprises generating a token (Tok) and sending said token (Tok) to the at least one external operational remote manager module (112; 204) requesting to perform the association of the eUICC for IoT devices (102; 200) with the at least one external operational remote manager module (112; 204).

12. The method according to claim 10 or claim 11, wherein said operation of issuing, via the at least one external handling remote manager module (202), a request of associating an external operational remote manager module (112; 204) to said eUICC for IoT devices (102; 200) comprises, to provide to the eUICC for IoT devices (102; 200) a token (Tok) via the at least one external operational remote manager module (112; 204), providing by said at least one external handling remote manager module (202) said token (Tok) to the at least one external operational remote manager module (112; 204) by:
- receiving at the at least one external handling remote manager module (202) a token generation request (Tok_{Req}), in particular sent by an original equipment manufacturer OEM (206);
- generating, in response to the reception of the token generation request (Tok_{Req}) and at the at least one external handling remote manager module (202), the token (Tok), said token (Tok) being signed with a private key of said at least one external handling remote manager module (202); and
- sending, via the at least one external handling remote manager module (202), the token (Tok) to the at least one external operational remote manager module (112; 204).

13. The method according to any one of claims 10 to 12, wherein upon the performing of the association between said eUICC for IoT devices (102; 200) and at least one external operational remote manager module (112; 204), said at least one external handling remote manager module (202) is configured to issue further requests of associating external operational remote manager modules (112; 204) to the eUICC for IoT devices (102; 200), said at least one external handling remote manager module (202) being an administrative remote manager module; and
wherein said administrative remote manager module is associated to the eUICC for IoT devices (102; 200):
- during a production of said eUICC for IoT devices (102; 200), or
- in response to the reception at the eUICC for IoT devices (102; 200) of a request of associating the administrative remote manager module with said eUICC for IoT devices (102; 200) using configuration data of said administrative remote manager module, said request of association being signed with a private key of a different administrative remote manager module.

14. An external handling remote manager module (112; 204), in particular an eSIM IoT remote Manager eIM, configured to perform only remote manager modules management operations in an embedded Universal Integrated Circuit Card, eUICC, for Internet of Things, IoT, devices (102; 200) out of a set of operations comprising profile state management operations and remote manager modules management operations;
said external handling remote manager module (112; 204) being configured to be associated with at least an embedded Universal Integrated Circuit Card, eUICC, for Internet of Things, IoT, devices and being configured to execute the steps of the method according to any one of claims 10 to 13.

15. Method for managing association between an embedded Universal Integrated Circuit Card, eUICC, for Internet of Things, IoT, devices (102; 200) and an external operational remote manager module (112; 204) in a set of external remote manager modules (112; 204) comprising external operational remote manager modules (112; 204), in particular eSIM IoT remote Managers eIMs, configured to perform at least a set of operations comprising profile state management operations and remote manager modules management operations in said eUICC for IoT devices (102; 200);
wherein said set of external remote manager modules (112; 204) comprises at least one external handling remote manager module (202), in particular an eSIM IoT remote Manager eIM, configured to perform in said set of operations only remote manager modules management operations in said eUICC for IoT devices (102; 200), said at least one external handling remote manager module (202) being associated with said eUICC for IoT devices (102; 200);
said method comprising, via at least one of the external operational remote manager modules (112; 204):
- receiving at the at least one of the external operational remote manager modules (112; 204) from said at least one external handling remote manager module (202) a request to be associated to said eUICC for IoT devices (102; 200); and
- in response to the reception of said request to be associated to said eUICC for IoT devices (102; 200), sending from the at least one of the external operational remote manager modules (112; 204) to the eUICC for IoT devices (102; 200) a request of association.

16. The method according to claim 15, wherein said operation of sending to the eUICC for IoT devices (102; 200) the request of association comprises sending to said eUICC for IoT devices (102; 200) a token (Tok).

17. The method according to claim 15 or claim 16, wherein said operation of sending to the eUICC for IoT devices (102; 200) the request of association comprises sending to said eUICC for IoT devices (102; 200) an ADD eIM command, said ADD eIM command comprising configuration data of said at least one of the external operational remote manager modules (112; 204) and a token (Tok).

18. The method according to any one of claims 15 to 17, comprising, upon association between the eUICC for IoT devices (102; 200) and the at least one of the external operational remote manager modules (112; 204), sending from said at least one of the external operational remote manager modules (112; 204) to the eUICC for IoT devices (102; 200) a removing association request indicating to remove said association between said at least one external handling remote manager module (202) and said eUICC for IoT devices (102; 200);
in particular, wherein:
- said removing association request is signed with a private key of the at least one of the external operational remote manager modules (112; 204); and/or
- said removing association request is comprised in a DELETE eIM command, said DELETE eIM command being sent by said at least one of the external operational remote manager modules (112; 204) to the eUICC (102; 200).
